(19) **Europäisches Patentamt / European Patent Office / Office européen des brevets**

(11) **EP 2 511 626 A1**

(12) # EUROPEAN PATENT APPLICATION
published in accordance with Art. 153(4) EPC

(43) Date of publication:
**17.10.2012 Bulletin 2012/42**

(21) Application number: **10835883.9**

(22) Date of filing: **02.12.2010**

(51) Int Cl.:
***F25B 1/00*** (2006.01)

(86) International application number:
**PCT/JP2010/071562**

(87) International publication number:
**WO 2011/070962 (16.06.2011 Gazette 2011/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2009 JP 2009279390**

(71) Applicant: **Sharp Kabushiki Kaisha**
**Osaka-shi, Osaka 545-8522 (JP)**

(72) Inventor: **YOSHIDA, Michiho, c/o Sharp Kabushiki Kaisha**
**Osaka-shi, Osaka 545-8522 (JP)**

(74) Representative: **Treeby, Philip David William et al**
**R.G.C. Jenkins & Co**
**26 Caxton Street**
**London**
**Greater London SW1H 0RJ (GB)**

(54) **AIR CONDITIONER, METHOD FOR CONTROLLING APERTURE OF EXPANSION VALVE, AND COMPUTER READABLE STORAGE MEDIUM FOR STORING PROGRAM FOR CONTROLLING APERTURE OF EXPANSION VALVE**

(57)     An air conditioner includes: a compressor (5) for compressing a refrigerant; an expansion valve (2) for adjusting the flow of the refrigerant; a first temperature sensor (7) for detecting a discharge temperature of the compressor (5); and a second temperature sensor (6 or 8) for detecting a temperature of a condenser (1 or 3). A discharge temperature difference is calculated that is a difference between the discharge temperature detected by the first temperature sensor (7) and the temperature of an outdoor heat exchanger (1) or an indoor heat exchanger (3) functioning as the condenser that is detected by the second temperature sensor (6 or 8). The opening of the expansion valve is set based on the calculated discharge temperature difference and a target discharge temperature difference that is set so that a target degree of superheat is obtained.

FIG.1

DIRECTION OF REFRIGERANT FLOW

HEATING

COOLING

**Description**

TECHNICAL FIELD

The present invention relates to an air conditioner as well as a method and a program for controlling the opening of an expansion valve, and particularly to an air conditioner adjusting the flow of a refrigerant by controlling the opening of an expansion valve, as well as a method and a program for controlling the opening of an expansion valve.

BACKGROUND ART

Generally, an air conditioner includes components such as a compressor, a four-way (switch) valve, an outdoor heat exchanger, an expansion valve for adjusting the flow of a refrigerant when reducing the pressure, and an indoor heat exchanger. Such an air conditioner is capable of performing both the cooling cycle operation and the heating cycle operation by switching the four-way valve. When the cooling cycle operation is done, the piping connection is made to configure a refrigerant flow path (cooling cycle) in which the refrigerant circulates through the components in the order of the compressor, the four-way valve, the outdoor heat exchanger (condenser), the expansion valve, the indoor heat exchanger (evaporator), the four-way valve, and the compressor. Thus, the heat absorbed by the indoor heat exchanger is released outdoors by the outdoor heat exchanger. In contrast, when the heating cycle operation is done, the piping connection is made to configure a refrigerant flow path (heating cycle) in which the refrigerant circulates through the components in the order of the compressor, the four-way valve, the indoor heat exchanger (condenser), the expansion valve, the outdoor heat exchanger (evaporator), the four-way valve, and the compressor. Thus, the outdoor heat absorbed by the outdoor heat exchanger is released into the room by the indoor heat exchanger.

When the heat exchange cycle as described above is formed, generally the evaporator temperature and the evaporator outlet temperature are detected to thereby calculate the degree of superheat, and the degree of superheat is used to control the opening of the expansion valve.

Another method for controlling the expansion valve is disclosed in PTL 1, according to which the inlet temperature of the expansion valve and the outlet temperature of the expansion valve (or the inlet temperature of the evaporator) are detected to estimate the evaporation saturation temperature. From the estimated evaporation saturation temperature and a set degree of superheat, a target suction temperature of the compressor is determined. The opening of the expansion valve is controlled so that the suction temperature of the compressor meets the target suction temperature.

PTL 2 discloses that the opening of the expansion valve is controlled in accordance with a temperature difference between the temperature of the refrigerant at the discharge of the compressor and an optimum temperature of the refrigerant at the discharge which is calculated based on the evaporation temperature and the condensation temperature.

CITATION LIST

PATENT LITERATURE

    PTL 1: Japanese Patent Laying-Open No. 7-98160
    PTL 2: Japanese Patent Laying-Open No. 4-93541

SUMMARY OF INVENTION

TECHNICAL PROBLEM

In the case where the evaporator temperature and the evaporator outlet temperature are used for calculating the degree of superheat, temperature sensors such as thermistors have to be provided respectively at the inlet and the outlet of the evaporator.

Even in such a case as PTL 1 where the degree of superheat is estimated without detecting the evaporator temperature, a separate thermistor or the like is necessary for detecting the suction temperature of the compressor.

According to PTL 2, the temperature of the refrigerant at the discharge of the compressor, the evaporation temperature, and the condensation temperature are detected to control the opening of the expansion valve. PTL 2 thus does not disclose that the opening of the expansion valve is controlled based on a temperature difference between two locations.

The present invention has been made to solve the above-described problems, and an object of the present invention is to provide an air conditioner capable of appropriately controlling the opening of the expansion valve without increasing the number of temperature sensors, as well as a method and a program for controlling the opening of the expansion valve.

SOLUTION TO PROBLEM

An air conditioner according to an aspect of the present invention includes: a compressor for compressing a refrigerant; an expansion valve for adjusting a flow of the refrigerant; a first temperature sensor for detecting a discharge temperature of the compressor; a second temperature sensor for detecting a temperature of a condenser; and control means for controlling an opening of the expansion valve. The control means calculates a discharge temperature difference which is a difference between the discharge temperature detected by the first temperature sensor and the temperature of the condenser detected by the second temperature sensor, and sets a basic opening which is an opening of the expansion valve under normal control, based on the calculated discharge temperature difference and a target discharge temperature difference that is set so that a target degree of superheat is obtained.

Preferably, when the calculated discharge temperature difference is not less than a predetermined first threshold value, the control means controls the opening of the expansion valve so that the opening is larger than the basic opening under the normal control.

Preferably, when the calculated discharge temperature difference is not more than a predetermined second threshold value, the control means controls the opening of the expansion valve so that the opening is smaller than the basic opening under the normal control. The second threshold value is smaller than the first threshold value.

Preferably, the control means calculates the target discharge temperature difference from the number of revolutions of the compressor.

Preferably, the air conditioner further includes: a switch valve for switching direction of circulation of the refrigerant between a cooling cycle operation and a heating cycle operation; an outdoor heat exchanger for heat exchange between outdoor air and the refrigerant; and an indoor heat exchanger for heat exchange between indoor air and the refrigerant. In the cooling cycle operation, the condenser corresponds to the outdoor heat exchanger. In the heating cycle operation, the condenser corresponds to the indoor heat exchanger.

According to another aspect of the present invention, a method for controlling an opening of an expansion valve of an air conditioner is provided. The air conditioner includes: the expansion valve for adjusting a flow of a refrigerant; a first temperature sensor for detecting a discharge temperature of a compressor; and a second temperature sensor for detecting a temperature of a condenser. The method includes the steps of: calculating a discharge temperature difference which is a difference between the discharge temperature detected by the first temperature sensor and the temperature of the condenser detected by the second temperature sensor; and setting a basic opening which is an opening of the expansion valve under normal control, based on the calculated discharge temperature difference and a target discharge temperature difference that is set so that a target degree of superheat is obtained.

According to still another aspect of the present invention, a computer-readable recording medium with an expansion valve opening control program recorded thereon is provided. The expansion valve opening control program causes a computer, which is provided to an air conditioner including: an expansion valve for adjusting a flow of a refrigerant; a first temperature sensor for detecting a discharge temperature of a compressor; and a second temperature sensor for detecting a temperature of a condenser, to perform the steps of: calculating a discharge temperature difference which is a difference between the discharge temperature detected by the first temperature sensor and the temperature of the condenser detected by the second temperature sensor; and setting a basic opening which is an opening of the expansion valve under normal control, based on the calculated discharge temperature difference and a target discharge temperature difference that is set so that a target degree of superheat is obtained.

ADVANTAGEOUS EFFECTS OF INVENTION

In accordance with the present invention, the opening of the expansion valve is set based on: the difference between the compressor discharge temperature and the condenser temperature (discharge temperature difference); and the target discharge temperature difference that is set so that a target degree of superheat is obtained. Accordingly, the opening of the expansion valve can appropriately be controlled without increase of the number of temperature sensors.

BRIEF DESCRIPTION OF DRAWINGS

Fig. 1 is a diagram schematically showing a refrigerant circuit of an air conditioner in an embodiment of the present invention.
Fig. 2 is an external view of an indoor unit of an air conditioner in an embodiment of the present invention.
Fig. 3 is a cross-sectional view schematically showing an internal configuration of the indoor unit shown in Fig. 2.
Fig. 4 is an external view of an outdoor unit of an air conditioner in an embodiment of the present invention.
Fig. 5 is a diagram schematically showing an internal configuration of the outdoor unit shown in Fig. 4.
Fig. 6 is a functional block diagram showing a functional configuration of an air conditioner in an embodiment of the present invention.
Fig. 7 is a diagram showing an example of a Mollier diagram (P-h diagram).
Fig. 8 is a diagram showing a relation between a target discharge temperature difference and each threshold value, and the number of revolutions of a compressor in an embodiment of the present invention.
Fig. 9 is a flowchart showing a process of calculating a target opening in an embodiment of the present invention.

DESCRIPTION OF EMBODIMENTS

An embodiment of the present invention will be described in detail with reference to the drawings. In the drawings, the same or corresponding components are denoted by the same reference characters, and a description thereof will not be repeated.

<As to Refrigerant Circuit>

First, an example of a refrigerant circuit of an air conditioner in the present embodiment will be described.

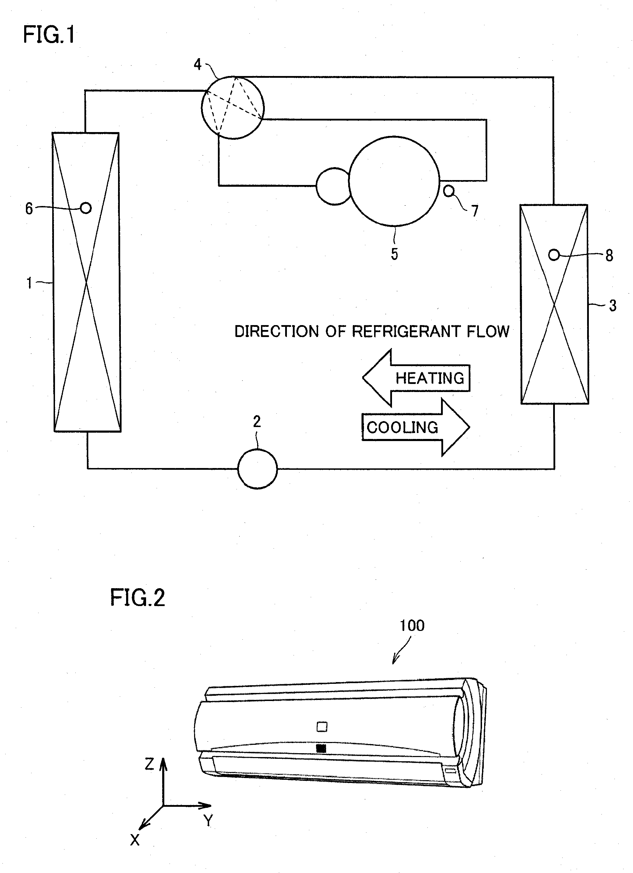

Fig. 1 is a diagram schematically showing the refrigerant circuit of the air conditioner in the embodiment of the present invention.
Referring to Fig. 1, the air conditioner includes a heat exchanger 1 for an outdoor unit (hereinafter referred to as "outdoor heat exchanger"), an expansion valve 2, a heat exchanger 3 for an indoor unit (hereinafter referred to as "indoor heat exchanger"), a four-way valve 4, and a compressor 5. They are connected in order in the form of a closed loop. Compressor 5 compresses a refrigerant. Outdoor heat exchanger 1 transfers heat between the outdoor air and the refrigerant. Expansion valve 2 is controlled for adjusting the flow of the refrigerant. Indoor heat exchanger 3 transfers heat between the indoor air and the refrigerant. Four-way valve 4 switches the direction in which the refrigerant circulates, depending on whether the operation is the cooling cycle operation or the heating cycle operation.
The air conditioner further includes a temperature sensor 6 for measuring the temperature of outdoor heat exchanger 1, a temperature sensor 7 for measuring the discharge temperature of compressor 5, and a temperature sensor 8 for measuring the temperature of indoor heat exchanger 3. These temperature sensors 6, 7, 8 are, for example, thermistors.
As indicated by an arrow in Fig. 1, when the cooling cycle operation is performed, the refrigerant circulates through compressor 5, four-way valve 4, outdoor heat exchanger 1, expansion valve 2, indoor heat exchanger 3, four-way valve 4, and compressor 5 in this order. In this case, outdoor heat exchanger 1 functions as a condenser for condensing and liquefying the compressed refrigerant of a high temperature, and indoor heat exchanger 3 functions as an evaporator for evaporating the liquefied refrigerant to thereby convert the refrigerant into a low-temperature gas. When the heating operation is performed, the refrigerant circulates through compressor 5, four-way valve 4, indoor heat exchanger 3, expansion valve 2, outdoor heat exchanger 1, four-way valve 4, and compressor 5 in this order. In this case, outdoor heat exchanger 1 functions as an evaporator and indoor heat exchanger 3 functions as a condenser.
While the present embodiment will be described in which the heating cycle operation and the cooling cycle operation can be switched to each other, the air conditioner may be capable of only one of the heating cycle operation and the cooling cycle operation. In this case, outdoor heat exchanger 1 and indoor heat exchanger 3 each function solely as a condenser or an evaporator.

<External Appearance and Configuration>

As to indoor unit:

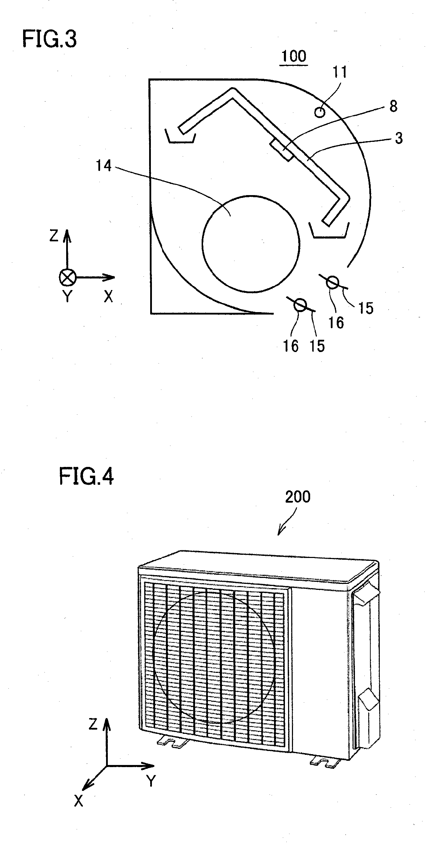

Fig. 2 is an external view of an indoor unit 100 of the air conditioner in the embodiment of the present invention. Fig. 3 is a cross-sectional view schematically showing an internal configuration of indoor unit 100 in Fig. 2. In Fig. 3, a cross section of indoor unit 100 as seen in the direction of the Y axis in Fig. 2 is shown.

Referring to Fig. 3, indoor unit 100 further includes, in addition to indoor heat exchanger 3 and temperature sensor 8 shown in Fig. 1, a temperature sensor 11 for measuring the room temperature, an indoor fan 14, a louver 15, and a louver motor 16. Louver 15 is a wind direction guide member provided in an air outlet of indoor unit 100. Louver motor 16 drives louver 15 so that louver 15 turns. A plurality of louvers 15 are driven so that they are identically oriented.
As to outdoor unit:

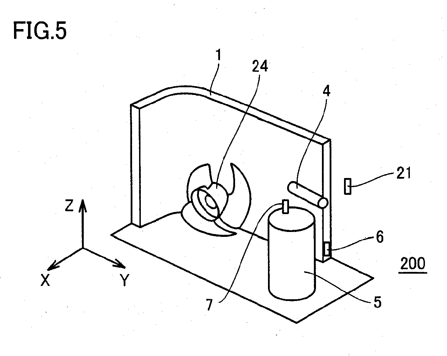

Fig. 4 is an external view of an outdoor unit 200 of the air conditioner in the embodiment of the present invention. Fig. 5 is a diagram schematically showing an internal configuration of outdoor unit 200 in Fig. 4.

Referring to Fig. 5, outdoor unit 200 includes, in addition to outdoor heat exchanger 1, four-way valve 4, compressor 5, and temperature sensor 6 shown in Fig. 1, a temperature sensor 21 for measuring the outdoor air temperature, and an outdoor fan 24.
As to functional configuration of air conditioner:

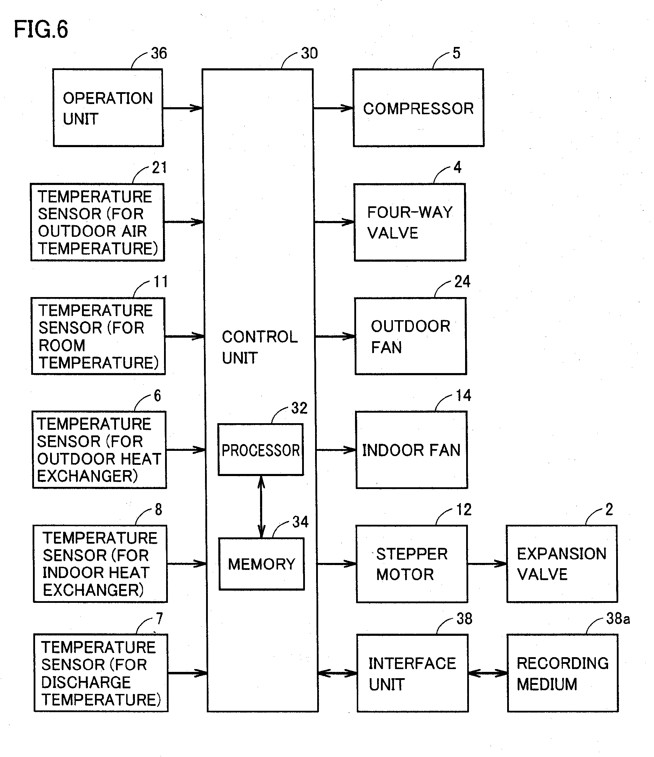

Fig. 6 is a functional block diagram showing a functional configuration of the air conditioner in the embodiment of the present invention.

Referring to Fig. 6, the air conditioner further includes, in addition to the components shown in Figs. 1, 3, and 5, a stepper motor 12 driven for adjusting the opening of expansion valve 2, a control unit 30 for controlling the whole air conditioner, and an operation unit 36 for receiving instructions from a user. In the present embodiment, the opening of expansion valve 2 is calculated as corresponding to the number of excitation steps for the phases of stepper motor 12. It is noted that expansion valve 2 is not limited to the expansion valve whose opening is adjusted by stepper motor 12, and may be a thermostatic expansion valve, for example. Specifically, a feeler bulb in which the refrigerant is enclosed and the expansion valve are connected by a capillary tube, and the inside of the expansion valve is partitioned by a diaphragm. The opening of the expansion valve may also be controlled by means of the pressure that is applied to the diaphragm depending on the temperature of the feeler bulb.

Control unit 30 is contained in indoor unit 100 and includes a processor 32 for performing various operations, and a memory 34 for storing various programs and data. Processor 32 is configured for example by a CPU (Central Processing Unit). Processor 32 executes a program stored in memory 34 to thereby control the opening of expansion valve 2 as described later herein. Memory 34 may for example be a nonvolatile memory such as flash memory.

Operation unit 36 includes, for example, a power switch, a temperature adjustment key, an air volume adjustment key, and a timer set key.

The air conditioner may further include an interface unit 38 for reading/writing data/program from/in a computer-readable non-transitory recording medium 38a. Processor 32 stores in memory 34 the program read by interface unit 38 from recording medium 38a (or updates an existing program) to thereby perform control of the opening of expansion valve 2 as described later herein (a process of calculating the opening). Recording medium 3 8a includes, for example, an optical medium such as CD-ROM (Compact Disc-ROM) and a magnetic recording medium such as memory card.

As to control of expansion valve:

A description will be given of control (control of the opening) of expansion valve 2 performed by control unit 30 (processor 32) in the present embodiment.

Generally, in order to efficiently perform heat exchange in each cycle, the opening of the expansion valve is often controlled by means of the degree of superheat which is calculated from the outlet temperature of the evaporator. Actually, the evaporator temperature and the evaporator outlet temperature are detected and control is performed so that the temperature difference between the evaporator temperature and the evaporator outlet temperature is a target degree of superheat. "Degree of superheat" represents a temperature difference between a superheated vapor temperature and a dry saturated vapor temperature at a certain pressure.

In the present embodiment as well, the degree of superheat is used to control expansion valve 2. The target degree of superheat, however, is estimated in the present embodiment from a temperature difference (TMP_diff) between a discharge temperature (TMP_to) and a condenser temperature (TMP_con).

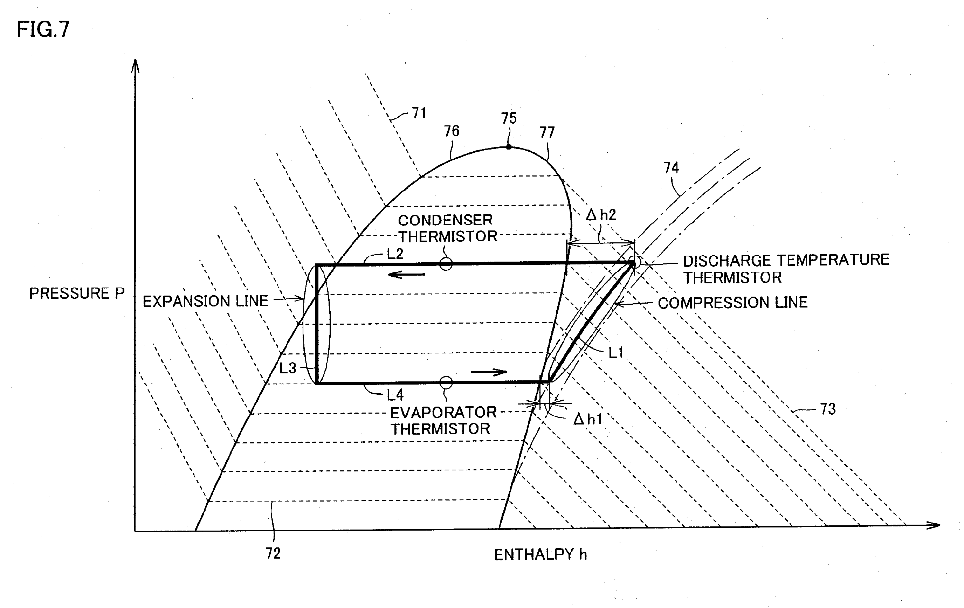

As described above, conventionally the degree of superheat is usually calculated from the evaporator temperature and the evaporator outlet temperature. However, since a compression line on a Mollier diagram is determined by the compression pressure (corresponding to the number of revolutions) of compressor 5, control can also be performed by means of a difference between the discharge temperature and the condenser temperature (the difference will hereinafter be referred to as "discharge temperature difference") similarly to the control using the difference between the evaporator temperature and the evaporator outlet temperature. This will be described in more detail with reference to Fig. 7.

Fig. 7 is a diagram showing an example of the Mollier diagram (P-h diagram). In the Mollier diagram, a relation between the pressure (kg/dm2) and the enthalpy (kcal/kg) is shown.

In Fig. 7, the closed loop drawn by lines L1 to L4 represents a heat pump cycle. Line L1 is ideally parallel with an isentrope 74 and called compression line. Line L2 is called condensation line, line L3 is called expansion line, and line L4 is called evaporation line. Condensation line L2 and evaporation line L4 are determined respectively by a temperature detected by a thermistor provided at the condenser and a temperature detected by a thermistor provided at the evaporator.

Isothermal lines 71 located in the region on the left side of a saturated liquid line 76 (on the side where the enthalpy is smaller) represent isothermal lines of supercooled liquid. Isothermal lines 72 located in the region surrounded by saturated liquid line 76 and a saturated vapor line 77 represent isothermal lines of wet vapor. Isothermal lines 73 located in the region on the right side of saturated vapor line 77 (on the side where the enthalpy is larger) represent isothermal lines of superheated vapor. Saturated liquid line 76 and saturated vapor line 77 meet at a critical point 75.

Since compression line L1 is specific to compressor 5, compression line L1 is determined according to the operating state of compressor 5. From the condenser's thermistor detecting the temperature of the condenser (the temperature corresponds to the condensation pressure) and the evaporator's thermistor detecting the temperature of the evaporator (the temperature corresponds to the evaporation pressure), a pressure difference between the inlet and the outlet of the expansion valve is known. Here, essentially the degree of superheat which is used for the conventional control cannot be determined without the evaporator inlet temperature and the evaporator outlet temperature. However, in the case where expansion valve 2 with a certain opening is stable, the pressure difference between the inlet and the outlet of the expansion valve is determined by the compression pressure (the number of revolutions) of compressor 5. Therefore, the degree of superheat (corresponding to $\Delta h1$) which is conventionally detected from the evaporator temperature and the evaporator outlet temperature can be calculated from the degree of superheat (corresponding to $\Delta h2$) which is determined by means of a thermistor for the discharge temperature (corresponding to temperature sensor 7 in the present embodiment) and a condenser's thermistor (corresponding to temperature sensor 6 or 8 in the present embodiment).

For the reason above, in the present embodiment, a target discharge temperature difference (TMP_aim) that provides a target degree of superheat is calculated from the number of revolutions (F) of compressor 5 corresponding to the compression pressure of compressor 5.

$$TMP\_aim = f(F)$$

The number of revolutions of compressor 5 may be determined based on a known algorithm. For example, the number of revolutions is determined based on a difference between a room temperature set by operation unit 36 and a current room temperature (temperature sensor 11). Namely, the larger the difference between the set temperature and the room temperature, the greater the number of revolutions of compressor 5.

Essentially, the degree of superheat can be calculated more reliably by detecting both the temperature of the evaporator inlet and the temperature of the evaporator outlet. The present embodiment, however, chiefly aims to perform control for escaping from an unsafe state (hereinafter referred to as "safety control") as described later herein, rather than accurate calculation of the degree of superheat. Therefore, an experimentally determined pressure difference between the inlet and the outlet of the expansion valve generated by the opening of expansion valve 2 is used to perform control by means of only the temperature difference between the discharge temperature and the condenser temperature (discharge temperature difference).

Here, while the target discharge temperature difference is determined by calculation, it may also be determined by means of a data table stored in advance in memory 34. Specifically, thermistors (temperature sensors) are provided in advance respectively at the evaporator and the evaporator outlet. Then, the discharge temperature and the condenser temperature when the degree of superheat determined from respective values detected by these thermistors is equal to the target degree of superheat are measured. The difference between the measured discharge temperature and the measured condenser temperature may be used as a target discharge temperature difference corresponding to the number of revolutions of the compressor when they are measured.

Regarding control of expansion valve 2, for the sake of cycle stabilization immediately after compressor 5 is driven, usually an initial opening of expansion valve 2 is set and the control of the opening based on the discharge temperature difference is not performed for a certain period of time (this period is referred to as mask time). In general, different values of the initial opening may be set respectively for the cooling cycle and the heating cycle as well as the case where the outdoor air temperature is high and the case where the outdoor air temperature is low, to thereby shorten the time taken for stabilizing the cycle.

After the mask time has elapsed that is a predetermined period of time in which the opening of the expansion valve is set to the initial opening, the opening of expansion valve 2 is controlled so that the opening is equal to the opening determined from the number of revolutions of compressor 5. After this, based on the degree of superheat determined for each number of revolutions of compressor 5, the opening of expansion valve 2 is subjected to PID control (Proportional control, Integral control, Derivative control), so that the discharge temperature difference meets the target discharge temperature difference which is defined for each number of revolutions of compressor 5.

The PID control is mentioned above as control for making the actual temperature difference closer to a target temperature difference. Here, only the proportional control or only the integral control may be performed. However, it is desirable that control is performed so that the overshoot is reduced as much as possible to thereby make the temperature difference closer to the target temperature difference. It should be noted that the influence of the opening of expansion valve 2 is reflected at a considerably later time on a change of the discharge temperature. Therefore, the opening may be controlled according to a method of the feed-forward control. Specifically, a stable discharge temperature may be predicted from the gradient of the temperature change at the time when the discharge temperature changes due to change of the opening of expansion valve 2. Alternatively, the opening may be controlled by a method according to which a mask time is provided between the time when the opening is changed once and the time when the opening is changed next time. It is desirable that the control method eventually prevents overshoot of the discharge temperature and quickly makes the discharge temperature stable.

As to safety control:

The air conditioner in the present embodiment performs safety control in the following manner.

(1) Safety control for preventing dew condensation

Particularly in the cooling cycle operation, the air conditioner in the present embodiment performs control for avoiding the state of dew condensation in the evaporator, namely indoor heat exchanger 3. If the condenser temperature is different by an excessive degree from the discharge temperature, the opening of expansion valve 2 is too small, which causes the state of a small flow of the refrigerant (the state where the refrigerant is likely to be vaporized). Accordingly, the refrigerant quickly becomes dry in indoor heat exchanger 3 (the ratio of the refrigerant that is converted into the gas phase in indoor heat exchanger 3 is high), and thus the refrigerant is separated in indoor heat exchanger 3 into a portion whose heat is exchanged and a portion whose heat is not exchanged. Therefore, a mixture of cold air and warm air is generated which causes the state where dew is likely to be formed in indoor heat exchanger 3.

In view of the above, the opening of expansion valve 2 is controlled so that the opening is made larger than the opening under normal control (hereinafter referred to as "basic opening") when the discharge temperature difference becomes not less than a threshold value Hth, to thereby prevent dew condensation in indoor heat exchanger 3. Specifically, the opening of expansion valve 2 is controlled so that it is larger by "Shigh" steps than the basic opening under normal control.

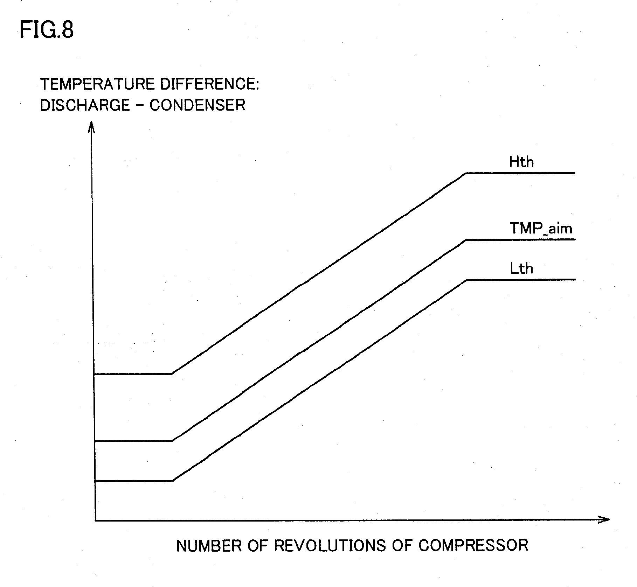

Threshold value Hth will be described with reference to Fig. 8. Fig. 8 is a diagram showing a relation between a target discharge temperature difference and each threshold value, and the number of revolutions of the compressor. In Fig. 8, the vertical axis represents the discharge temperature difference (difference: discharge temperature - (minus) condenser temperature), and the horizontal axis represents the number of revolutions of compressor 5.

Referring to Fig. 8, threshold value Hth is set for example higher by a certain temperature than a target discharge temperature difference line ("TMP_aim" in Fig. 8) which is defined for each number of revolutions of compressor 5. For example, a discharge temperature difference in the state where dew is likely to be formed in the heat exchanger (indoor heat exchanger 3) which is used as an evaporator in the cooling cycle may experimentally be measured in advance. Then, a margin may be provided with respect to the measured discharge temperature difference to determine the temperature difference line of threshold value Hth.

The number of steps "Shigh" may be determined experimentally or calculated by multiplying the opening of expansion valve 2 that is determined for each frequency (number of revolutions) of compressor 5 by 1/X. It should be noted that even when the same change of the opening is made, a greater number of revolutions of compressor 5 causes a larger change of the temperature, and therefore, it is desirable that the number of correction steps Shigh is larger for a larger number of revolutions of compressor 5.

Shigh (low rev of compressor) < Shigh (high rev of compressor)

(2) Safety control for preventing liquid back

The air conditioner in the present embodiment further performs control for avoiding the state where the refrigerant still in the liquid phase returns to compressor 5 regardless of whether the cycle is the cooling cycle or heating cycle.

When the discharge temperature difference becomes not more than a threshold value Lth, the opening of expansion valve 2 is controlled so that the opening is smaller than the opening under normal control. Regarding both the cooling cycle and the heating cycle, if the difference between the discharge temperature and the condenser temperature is excessively small, a state is likely to occur where the refrigerant which is still in the liquid phase returns from the heat exchanger used as the evaporator back to compressor 5 (the state of high humidity), which is likely to cause the liquid to return to compressor 5. In such a case, the opening of expansion valve 2 is controlled so that the opening is reduced to a large extent to thereby increase the gas phase of the two phases, namely the gas phase and the liquid phase, after the refrigerant is decompressed. Specifically, the opening of expansion valve 2 is controlled so that the opening is reduced by "Slow" steps relative to the basic opening under normal control. In this way, the lifetime of compressor 5 can be prevented from shortening and compressor 5 can be made less likely to fail.

Threshold value Lth will be described with reference again to Fig. 8. Referring to Fig. 8, threshold value Lth is set, for example, lower by a certain temperature than the target discharge temperature difference line ("TMP_aim" in Fig. 8) which is defined for each number of revolutions of compressor 5. For example, a discharge temperature difference in the state where the liquid back is likely to occur may experimentally be measured in advance. Then, a margin may be provided with respect to the measured discharge temperature difference to determine the temperature difference line of threshold value Hth.

The number of steps "Slow" here may be determined experimentally or calculated by multiplying the opening of expansion valve 2 which is determined for each frequency (number of revolutions) of compressor 5 by 1/Y. It should be noted that even when the same change of the opening is made, a greater number of revolutions of compressor 5 causes a larger change of the temperature, and therefore, it is desirable that the number of correction steps Slow is larger for a larger number of revolutions of compressor 5.

Slow (low rev of compressor) < Slow (high rev of compressor)

<Process of Calculating Target Opening of Expansion Valve 2>

Next, a description will be given of a process of calculating a target opening that is executed by processor 32 for controlling the opening of expansion valve 2 in the present embodiment.

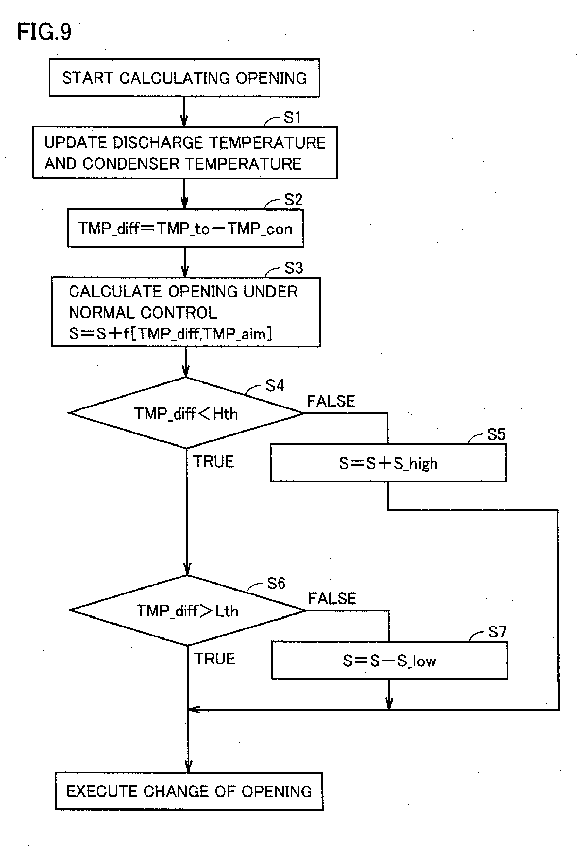

Fig. 9 is a flowchart showing the process of calculating a target opening in the embodiment of the present invention. This flowchart shows a function by which a target opening of expansion valve 2 is calculated. The process of the flowchart in Fig. 9 is performed periodically for example until an ending event occurs such as an instruction to stop operation. Further, the process shown in the flowchart of Fig. 9 is stored in advance in memory 34 in the form of a program, and processor 32 reads and executes this program to thereby perform the capability of the process of calculating the target opening.

Referring to Fig. 9, respective values of discharge temperature "TMP_to" and condenser temperature "TMP_con" are first updated (step S1). In the case of the cooling cycle operation, respective temperatures are detected by temperature sensor 7 provided at the outlet of compressor 5 and temperature sensor 6 provided at outdoor heat exchanger 1. In the case of the heating cycle operation, respective temperatures are detected by temperature sensor 7 provided at the outlet of compressor 5 and temperature sensor 8 provided at indoor heat exchanger 3.

Next, from the temperatures updated in step S1, discharge temperature difference "TMP_diff" is calculated. Specifically, the discharge temperature difference (TMP_diff) is calculated by subtracting the condenser temperature (TMP_con) from the discharge temperature (TMP_to).

The discharge temperature difference (TMP_diff) is thus calculated, and then the opening (basic opening) of expansion valve 2 under normal control is calculated as an opening implementation value "S" so that the temperature difference (TMP_diff) is identical to the target temperature difference "TMP_aim" (step S3). The target temperature difference (TMP_aim) is set in advance for each frequency of compressor 5 so that a target degree of superheat is met. The formula for calculating the basic opening under normal control may be determined based on the results of experiment performed in advance. Further, such a basic opening (number of steps) may be determined from a data table stored in memory 34, rather than by means of the calculation formula.

Subsequently, it is determined whether the discharge temperature difference (TMP_diff) is smaller than the set threshold value Hth (step S4). When the discharge temperature difference (TMP_diff) is equal to or larger than threshold value Hth ("FALSE" in step S4), a new opening implementation value S is set to a value determined by adding "S_high" to the basic opening under normal control (opening implementation value S in step S3) so that the opening is further increased (step S5). In this way, the opening implementation value is changed. Processor 32 drives stepper motor 12 using the changed opening implementation value. Consequently, the opening of expansion valve 2 is controlled so that the flow is larger than that under normal control.

When the discharge temperature difference (TMP_diff) is smaller than threshold value Hth ("TRUE" in step S4), the process proceeds to step S6.

In step S6, it is determined whether the discharge temperature difference (TMP_diff) is larger than the set threshold value Lth. When the discharge temperature difference (TMP_diff) is equal to or smaller than threshold value Lth ("FALSE" in step S6), a new opening implementation value S is set to a value determined by subtracting "S_low" from the basic opening under normal control (opening implementation value S in step S3) so that the opening is further reduced (step S7). Thus, the opening implementation value is changed. Processor 32 drives stepper motor 12 using the changed opening implementation value. Consequently, the opening of expansion valve 2 is controlled so that the flow is smaller than that under normal control.

When the discharge temperature difference (TMP_diff) is larger than threshold value Lth ("TRUE" in step S6), the opening implementation value is not changed, and the opening implementation value used for control is set to the basic opening under normal control.

As seen from the foregoing, according to the present embodiment, only the discharge temperature thermistor (temperature sensor 7) and the thermistor (temperature sensors 6, 8) for the heat exchanger serving as the condenser are used to estimate the degree of superheat. Therefore, the opening of the expansion valve can be controlled without increase of the number of temperature sensors to be used for calculating the degree of superheat. Consequently, the production cost of the air conditioner can be reduced.

Even in the case where the refrigerant becomes an unstable state, the opening of the expansion valve is immediately controlled so that a safe state is regained, and thus failures of the compressor can be reduced. Consequently, the comfortable and safe air conditioner can be provided.

It should be construed that embodiments disclosed herein are by way of illustration in all respects, not by way of limitation. It is intended that the scope of the present invention is defined by claims, not by the description above, and encompasses all modifications and variations equivalent in meaning and scope to the claims.

REFERENCE SIGNS LIST

1 outdoor heat exchanger; 2 expansion valve; 3 indoor heat exchanger; 4 four-way valve; 5 compressor; 6, 7, 8, 11, 21 temperature sensor; 12 stepper motor; 14 indoor fan; 15 louver; 16 louver motor; 24 outdoor fan; 30 control unit; 32 processor; 34 memory; 36 operation unit; 38 interface unit; 38a recording medium; 100 indoor unit; 200 outdoor unit

**Claims**

1. An air conditioner comprising:

a compressor (5) for compressing a refrigerant;
an expansion valve (2) for adjusting a flow of said refrigerant;
a first temperature sensor (7) for detecting a discharge temperature of said compressor (5);
a second temperature sensor (6 or 8) for detecting a temperature of a condenser (1 or 3); and
control means (30) for controlling an opening of said expansion valve (2),
said control means (30) calculating a discharge temperature difference which is a difference between said discharge temperature detected by said first temperature sensor (7) and the temperature of said condenser (1 or 3) detected by said second temperature sensor (6 or 8), and said control means (30) setting a basic opening which is an opening of said expansion valve (2) under normal control, based on said calculated discharge temperature difference and a target discharge temperature difference (TMP_aim) that is set so that a target degree of superheat is obtained.

2. The air conditioner according to claim 1, wherein when said calculated discharge temperature difference is not less than a predetermined first threshold value (Hth), said control means (30) controls the opening of said expansion valve (2) so that the opening is larger than said basic opening under said normal control.

3. The air conditioner according to claim 2, wherein when said calculated discharge temperature difference is not more than a predetermined second threshold value (Lth), said control means (30) controls the opening of said expansion valve (2) so that the opening is smaller than said basic opening under said normal control, and said second threshold value is smaller than said first threshold value.

4. The air conditioner according to claim 1, wherein when said calculated discharge temperature difference is not more than a predetermined second threshold value (Lth), said control means (30) controls the opening of said expansion valve (2) so that the opening is smaller than said basic opening under said normal control.

5. The air conditioner according to any one of claims 1 to 4, wherein said control means (30) calculates said target discharge temperature difference (TMP_aim) from the number of revolutions of said compressor (5).

6. The air conditioner according to any one of claims 1 to 4, further comprising:

a switch valve (4) for switching direction of circulation of said refrigerant between a cooling cycle operation and a heating cycle operation; an outdoor heat exchanger (1) for heat exchange between outdoor air and said refrigerant; and an indoor heat exchanger (3) for heat exchange between indoor air and said refrigerant, wherein in the cooling cycle operation, said condenser corresponds to said outdoor heat exchanger (1) and, in the heating cycle operation, said condenser corresponds to said indoor heat exchanger (3).

7. A method for controlling an opening of an expansion valve (2) of an air conditioner, said air conditioner including: said expansion valve (2) for adjusting a flow of a refrigerant; a first temperature sensor (7) for detecting a discharge temperature of a compressor (5); and a second temperature sensor (6 or 8) for detecting a temperature of a condenser (1 or 3), said method comprising the steps of:

calculating a discharge temperature difference which is a difference between said discharge temperature detected by said first temperature sensor (7) and the temperature of said condenser (1 or 3) detected by said second temperature sensor (6 or 8); and setting a basic opening which is an opening of said expansion valve (2) under normal control, based on said calculated discharge temperature difference and a target discharge temperature difference (TMP_aim) that is set so that a target degree of superheat is obtained.

8. A computer-readable recording medium with an expansion valve opening control program recorded thereon for causing a computer (30) provided to an air conditioner including: an expansion valve (2) for adjusting a flow of a refrigerant; a first temperature sensor (7) for detecting a discharge temperature of a compressor (5); and a second temperature sensor (6 or 8) for detecting a temperature of a condenser (2), to perform the steps of:

calculating a discharge temperature difference which is a difference between said discharge temperature detected by said first temperature sensor (7) and the temperature of said condenser (2) detected by said second temperature sensor (6 or 8); and setting a basic opening which is an opening of said expansion valve (2) under normal control, based on said calculated discharge temperature difference and a target discharge temperature difference that is set so that a target degree of superheat is obtained.

FIG.1

DIRECTION OF REFRIGERANT FLOW

HEATING

COOLING

FIG.2

Z

Y

X

FIG.3

FIG.4

FIG.5

FIG.6

| | | |
|---|---|---|
| 36 | 30 | 5 |
| OPERATION UNIT | | COMPRESSOR |
| 21 | | 4 |
| TEMPERATURE SENSOR (FOR OUTDOOR AIR TEMPERATURE) | | FOUR-WAY VALVE |
| 11 | CONTROL UNIT | 24 |
| TEMPERATURE SENSOR (FOR ROOM TEMPERATURE) | | OUTDOOR FAN |
| 6 | 32 | 14 |
| TEMPERATURE SENSOR (FOR OUTDOOR HEAT EXCHANGER) | PROCESSOR | INDOOR FAN |
| 8 | 34 | 12 / 2 |
| TEMPERATURE SENSOR (FOR INDOOR HEAT EXCHANGER) | MEMORY | STEPPER MOTOR / EXPANSION VALVE |
| 7 | | 38 / 38a |
| TEMPERATURE SENSOR (FOR DISCHARGE TEMPERATURE) | | INTERFACE UNIT / RECORDING MEDIUM |

# FIG.7

# FIG.8

TEMPERATURE DIFFERENCE:
DISCHARGE – CONDENSER

Hth

TMP_aim

Lth

NUMBER OF REVOLUTIONS OF COMPRESSOR

## FIG.9

START CALCULATING OPENING

↓ S1

UPDATE DISCHARGE TEMPERATURE
AND CONDENSER TEMPERATURE

↓ S2

$TMP\_diff = TMP\_to - TMP\_con$

↓ S3

CALCULATE OPENING UNDER
NORMAL CONTROL
$S = S + f[TMP\_diff, TMP\_aim]$

↓

S4
$TMP\_diff < Hth$ — FALSE

TRUE

S5
$S = S + S\_high$

↓

S6
$TMP\_diff > Lth$ — FALSE

TRUE

S7
$S = S - S\_low$

↓

EXECUTE CHANGE OF OPENING

## INTERNATIONAL SEARCH REPORT

| International application No. |
| --- |
| PCT/JP2010/071562 |

**A. CLASSIFICATION OF SUBJECT MATTER**
*F25B1/00*(2006.01)i

According to International Patent Classification (IPC) or to both national classification and IPC

**B. FIELDS SEARCHED**

Minimum documentation searched (classification system followed by classification symbols)
F25B1/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2008-215648 A (Mitsubishi Heavy Industries, Ltd.), 18 September 2008 (18.09.2008), claim 1; paragraphs [0016] to [0023]; fig. 1, 3 (Family: none) | 1-8 |
| A | JP 2005-121361 A (LG Electronics Inc.), 12 May 2005 (12.05.2005), claims 12 to 14; paragraphs [0044] to [0058]; fig. 2, 4 & US 2005/0081539 A1 & EP 1524475 A1 & EP 1760411 A1 & DE 602004011870 D & DE 602004021040 D & KR 10-2005-0037081 A & CN 1645017 A | 1-8 |

☒ Further documents are listed in the continuation of Box C.  ☐ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| | |
| --- | --- |
| Date of the actual completion of the international search <br> 07 January, 2011 (07.01.11) | Date of mailing of the international search report <br> 18 January, 2011 (18.01.11) |
| Name and mailing address of the ISA/ <br> Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/071562 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-232508 A  (Mitsubishi Electric Corp.), 02 October 2008 (02.10.2008), claim 3; paragraph [0012] & EP 1972871 A2 | 1-8 |

Form PCT/ISA/210 (continuation of second sheet) (July 2009)

**EP 2 511 626 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7098160 A
- JP 4093541 A